# FASCICULE DE BREVET EUROPEEN

(11) **EP 0 654 617 B1**
(45) Date de publication et mention de la délivrance du brevet: **08.10.1997**
(21) Numéro de dépôt: 94402615.2
(22) Date de dépôt: 17.11.1994
(51) Int. Cl.: F16F 1/38

(54) **Articulation élastique à rigidité axiale contrôlée**
Elastisches Gelenk mit kontrollierter axialer Festigkeit
Elastic pivot with controlled axial stiffness

(30) Priorité: 19.11.1993 FR 9313857
(43) Date de publication de la demande: 24.05.1995
(73) Titulaire: HUTCHINSON, F-75008 Paris (FR)
(72) Inventeur: Durand, Joel, F-92800 Puteaux (FR)
(74) Mandataire: Picard, Jean-Claude Georges

(56) Documents cités:
- DE-A- 4 111 233
- DE-C- 4 139 582
- FR-A- 2 343 931
- US-A- 2 962 311

## Description

La présente invention concerne une articulation élastique à rigidité axiale contrôlée, du type comportant une armature intérieure à surface extérieure de révolution et une armature extérieure tubulaire coaxiale entourant ladite armature intérieure, une masse de matière élastique étant contenue entre les surfaces annulaires en regard de ces deux armatures, lesdites surfaces annulaires présentant des ondulations dans au moins un plan axial.

Par l'expression "rigidité axiale contrôlée", on entend préciser que cette articulation aura une certaine élasticité en direction axiale mais avec une sécurité à l'arrachement dans cette direction.

L'invention peut concerner en particulier, mais non exclusivement, les articulations de ce type destinées à assurer le montage articulé de bielles de liaison entre une boîte d'essieu et un châssis de bogie de wagon de chemin de fer. Il convient d'obtenir dans cette application une forte rigidité radiale avec une rigidité torsionnelle relativement faible. Dans l'articulation connue par le document US n° 2 962 311, il n'y a pas de moyens s'opposant à un arrachement de l'articulation en direction axiale, ce qui constitue un grave inconvénient.

Le but de la présente invention est d'éviter cet inconvénient, et à cet effet une articulation élastique du type général susdéfini est caractérisée en ce que ladite masse de matière élastique est adhérisée entre lesdites surfaces annulaires et en ce que le diamètre minimum des ondulations de l'armature extérieure est inférieur au diamètre maximum des ondulations de l'armature intérieure.

De la sorte, on obtient facilement et à peu de frais toutes les caractéristiques souhaitées : rigidité axiale contrôlée, du fait de la présence des ondulations, dont on peut choisir le nombre en fonction de la rigidité souhaitée, rigidité radiale aussi forte que voulu, selon l'épaisseur de matière élastique entre les deux armatures et la pente des ondulations, faible rigidité torsionnelle, débattements coniques importants, pratiquement indépendants de la rigidité axiale, et enfin une sécurité complète vis-à-vis du risque d'arrachement axial.

Les débattements coniques peuvent d'ailleurs être réglés en déterminant l'épaisseur de la masse de matière élastique selon la longueur de l'articulation : il est en effet possible de prévoir que l'épaisseur de ladite masse de matière élastique est constante ou variable en direction axiale.

Dans ce dernier cas, on peut augmenter la flexibilité en conique en prévoyant que l'épaisseur de ladite masse de matière élastique croît de la partie centrale vers les extrémités de l'articulation, de sorte à avoir une épaisseur de caoutchouc notablement plus importante vers les deux extrémités de l'articulation.

Selon une autre caractéristique de l'invention, la masse de matière élastique peut être précontrainte au montage, ceci par mise en oeuvre de tout moyen approprié, pour conférer à l'articulation les caractéristiques d'élasticité voulues et compenser les retraits de moulage, tout en limitant les risques d'arrachement axial.

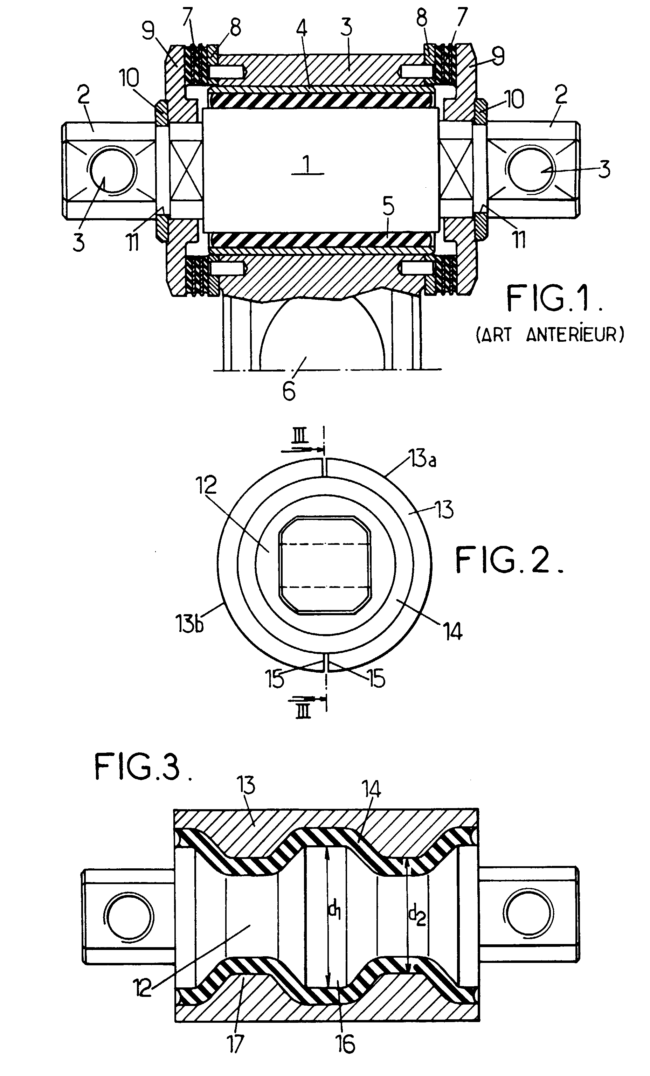

La précontrainte peut être obtenue par exemple par un rétreint de l'armature extérieure après moulage de la masse de matière élastique intermédiaire, ou encore par rapprochement de deux moitiés ou coquilles de l'armature extérieure mises en place, avant moulage, en position d'écartement l'une de l'autre, puis soudage de leurs bords.
A la figure 1 des dessins ci-annexés, on a représenté une articulation connue du type de celle qui a été évoquée au début de la présente description.
La figure 2 est une vue en bout d'une articulation conforme à l'invention ; et
la figure 3 est une vue en coupe axiale selon la ligne III-III de la figure 2.

L'articulation représentée à la figure 1 en coupe axiale comporte comme armature intérieure un noyau plein 1 comportant deux extrémités à profil octogonal 2 pourvues de trous de fixation 3. Son armature extérieure peut être considérée ici comme constituée par une tête de bielle 3 calée sur une douille mince 4, la masse de matière élastique, par exemple un manchon de caoutchouc ou analogue 5, étant adhérisée entre la surface intérieure de cette douille 4 et la surface extérieure du noyau 1. Ce manchon de caoutchouc 5 conférera donc à cette articulation de la bielle, dont le corps est référencé 6, les caractéristiques voulues de raideur torsionnelle et radiale. Pour limiter élastiquement les déplacements de l'armature intérieure 1 par rapport à l'armature extérieure 3, c'est-à-dire par rapport à la bielle en direction axiale, on a disposé aux extrémités de l'articulation des butées annulaires et latérales de caoutchouc lamifiées 7, intercalées respectivement entre des plaques 8 solidaires de l'armature extérieure 3 et des plaques 9 solidaires de l'armature intérieure 1 et maintenues axialement sur celle-ci par des rondelles 10 logées dans des gorges 11 du noyau 1. Cette disposition fournit une bonne sécurité vis-à-vis des efforts d'arrachement axiaux mais empêche à l'articulation de présenter la faible rigidité voulue vis-à-vis des déplacements coniques entre l'armature intérieure et l'armature extérieure.

En outre, comme déjà indiqué plus haut, les butées extrêmes 7 compliquent le montage et sont coûteuses en elles-mêmes.

Sur les figures 2 et 3 on a référencé l'armature intérieure en 12, l'armature extérieure en 13 et la masse de matière élastique intermédiaire en 14. On voit que cette masse pourra jouer exactement le même rôle que la masse de caoutchouc 5 du mode de réalisation connu, pour ce qui concerne les raideurs radiale et torsionnelle, mais qu'elle permettra en outre de conférer à l'articulation la raideur axiale voulue sans avoir recours à des butées extrêmes du type des butées 7 du mode de réalisation de l'art antérieur. Bien entendu, les ondulations 16 de l'armature intérieure 12 et les ondulations de forme complémentaire 17 de l'armature extérieure 13 pourront être en tout nombre approprié, selon la raideur axiale qu'il est souhaitable d'obtenir. La rigidité vis-à-vis des déplacements coniques relatifs entre les armatures intérieure et extérieure pourra également être réglée commodément et être rendue relativement faible, par exemple en épaississant la masse de matière élastique 14 au niveau de ses extrémités, c'est-à-dire en rendant son épaisseur plus grande aux extrémités que dans la partie centrale.

Sur la figure 3 on voit que les ondulations 16 et 17 ont des sommets plats, mais ils pourraient aussi bien être arrondis.

De préférence, le diamètre maximum d1 des ondulations de l'armature intérieure est supérieur au diamètre minimum d2 des ondulations de l'armature extérieure, ce qui empêche tout arrachement axial de l'articulation. Ceci peut être obtenu par exemple par un rétreint de l'armature extérieure 13 après moulage du caoutchouc, puisque autrement il ne serait pas possible d'introduire l'armature intérieure 12 dans l'armature extérieure.

En même temps, ce rétreint compensera les retraits de moulage du caoutchouc et soumettra ce dernier à une précontrainte.

Le même résultat peut être obtenu en élaborant l'armature extérieure 13 sous la forme de deux coquilles complémentaires 13a et 13b, comme visible sur la figure 2, coquilles qui pendant l'opération de moulage du caoutchouc 14 restent légèrement écartées l'une de l'autre. Il suffit alors après moulage d'en rapprocher les bords 15 et de les souder le long des génératrices de l'armature extérieure 13 pour obtenir, d'une part la mise sous précontrainte du caoutchouc et d'autre part les dispositions ci-dessus décrites, concernant les diamètres d1 et d2.

## Revendications

1. Articulation élastique à rigidité axiale contrôlée, du type comportant une armature intérieure (12) à surface extérieure de révolution et une armature extérieure tubulaire coaxiale (13) entourant ladite armature intérieure, une masse de matière élastique (14) étant contenue entre les surfaces annulaires en regard de ces deux armatures, lesdites surfaces annulaires présentant des ondulations (16, 17) dans au moins un plan axial, caractérisée en ce que ladite masse de matière élastique (14) est adhérisée entre lesdites surfaces annulaires et en ce que le diamètre minimum (d2) des ondulations (17) de l'armature extérieure (13) est inférieur au diamètre maximum (dl) des ondulations (16) de l'armature intérieure (12).

2. Articulation selon la revendication 1, caractérisée en ce que l'épaisseur de ladite masse de matière élastique (14) est variable en direction axiale, en croissant de la partie centrale vers les extrémités.

3. Articulation selon la revendication 1 ou 2, caractérisée en ce qu'une précontrainte de ladite masse (14) au montage est obtenue, après son moulage entre lesdites armatures (12, 13), par un rétreint de l'armature extérieure (13).

4. Articulation selon la revendication 1 ou 2, caractérisée en ce qu'une précontrainte de ladite masse (14) au montage est obtenue par son moulage entre l'armature intérieure (12) et une armature extérieure (13) constituée de coquilles (13a, 13b) dont les bords (15) sont en position relative de léger écartement, puis par rapprochement mutuel de ces bords (15) et fixation, par exemple par soudage.

## Patentansprüche

1. Elastisches Gelenk mit kontrollierter axialer Festigkeit, enthaltend ein inneres Verstärkungselement (12) mit einer äußeren Umlauffläche und ein äußeres, röhrenförmiges, koaxiales Verstärkungselement (13), welches das innere Verstärkungselement umgibt, wobei zwischen den ringförmigen Oberflächen gegenüber diesen beiden Verstärkungselementen ein Körper (14) aus elastischem Material vorgesehen ist, wobei ferner die ringförmigen Oberflächen Wellenlinien (16, 17) in wenigstens einer Axialebene aufweisen, dadurch gekennzeichnet, daß der Körper (14) aus elastischem Material zwischen den ringförmigen Oberflächen haftet und daß der minimale Durchmesser (d2) der Wellenlinien (17) des äußeren Verstärkungselementes (13) geringer ist als der maximale Durchmesser (d1) der Wellenlinien (16) des inneren Verstärkungselementes (12).

2. Gelenk nach Anspruch 1, dadurch gekennzeichnet, daß die Stärke des Körpers (14) aus elastischem Material in axialer Richtung variabel ist und der Körper (14) den zentralen Teil zu den äußeren Enden hin kreuzt.

3. Gelenk nach Anspruch 1 oder 2, dadurch gekennzeichnet, daß bei der Montage durch Zurückziehen des äußeren Verstärkungselementes (13) eine Vorspannung des Körpers (14) erreicht wird, nachdem dieser zwischen die Verstärkungselemente (12, 13) eingegossen wurde.

4. Gelenk nach Anspruch 1 oder 2, dadurch gekennzeichnet, daß bei der Montage ein Zurückziehen des Körpers (14) dadurch erreicht wird, daß er zwischen das innere Verstärkungselement (12) und ein äußeres Verstärkungselement (13) eingegossen wird, welches Gußformen (13a, 13b) aufweist, deren Kanten (15) relativ zu einem leichten Zwischenraum angeordnet sind, anschließend durch wechselseitige Annäherung der Kanten (15) und Befestigung, beispielsweise durch Schweißen.

## Claims

1. Elastic pivot with controlled axial stiffness, of the type comprising an inner frame (12) with outer revolving surface and an outer coaxial tubular frame (13) enclosing the said inner frame, a mass of elastic material (14) being contained between the facing annular surfaces of these two frames, the said annular surfaces having undulations (16,17) in at least one axial plane, characterised in that the said mass of elastic material (14) adheres between the said annular surfaces and in that the minimum diameter (d2) of the undulations (17) of the outer frame (13) is less than the maximum diameter (dl) of the undulations (16) of the inner frame (12).

2. Pivot according to claim 1 characterised in that the thickness of the said mass of elastic material (14) is variable in the axial direction, increasing from the central part towards the ends.

3. Pivot according to claim 1 or 2 characterised in that a pretension of the said mass (14) during assembly is obtained, after moulding between the said frames (13,14), through hammer-shaping of the outer frame (13).

4. Pivot according to claim 1 or 2 characterised in that a pretension of the said mass (14) during assembly is obtained through moulding same between the inner frame (12) and an outer frame (13) which comprises housings (13a,13b) whose edges (15) are in a slightly spaced relative position and then brought close together and fixed for example by soldering.
